# EUROPEAN PATENT APPLICATION

(11) **EP 4 417 397 A1**
(43) Date of publication of application: **21.08.2024**
(21) Application number: 23382157.8
(22) Date of filing: 20.02.2023
(51) Int. Cl.: B29C 64/118, B29C 64/40, B33Y 10/00, B33Y 40/00

(54) **PROCESS TO PREPARE POROUS 3D STRUCTURES WITH MULTISCALE POROSITY**

(71) Applicant: Consejo Superior De Investigaciones Científicas, 28006 Madrid (ES)
(72) Inventor: Sanz Horta, Raul, Madrid (ES); Elvira Pujalte, Carlos, Madrid (ES); Gallardo Ruiz, Alberto, Madrid (ES); Reinecke, Helmut, Madrid (ES); Rodriguez Hernandez, Juan, Madrid (ES)
(74) Representative: Pons

(57) **Abstract**

The present invention relates to a multistep process to prepare tailor made 3D microporous scaffolds using PCL, a biocompatible polymer. The strategy involves the fabrication of a 3D printed mould using PVA (water soluble) in which, during the layer-by-layer process, half of the mould has been filled with PCL. A subsequent foaming step allowed us to produce microporous structures inside the mould that are accommodated to the internal structure. A simple immersion in aqueous solution permitted to completely remove the mould and, therefore, the PCL microporous structure is recovered. Finally, a simple surface treatment using the Breath Figures approach provides surface pore structure formation.

## Description

The invention relates to a process for the fabrication of tailor-made 3D structures with controlled and combined multiscale macroscopic-microscopic, surface and inner porosities in a straightforward manner. More particularly, it refers to a process to prepare poly (8-caprolactone) (PCL) biocompatible scaffolds with multiscale porosity. The 3D scaffolds obtained can be employed to artificially produce bioinspired supports for different biomedical applications, including those for tissue regeneration purposes. Then, the invention belongs to the medicine field.

### BACKGROUND ART

Three-dimensional porous scaffolds are currently extensively employed to artificially produce bioinspired supports for different biomedical applications, including those for tissue regeneration purposes. In the so-called top-down approaches for tissue engineering, porous scaffolds are often used as carriers of cells and growth factors, aiming to boost and enable the targeted tissue regeneration. Multiple properties and requirements have been postulated for the regenerative implants, and among them, the precise control of the porosity and the 3D structure of the porous scaffold is a challenge still attracting high amount of basic and applied research effort.

Some of the several requirements to be accomplished by the regenerative implants are related to biocompatibility and bioactivity, in terms of do not triggering immune-reactive responses upon implantation, providing appropriate cell microenvironments and promoting specific tissue formation. Moreover, they should provide appropriate mechanical support and, in some cases, have to be biodegradable, with minimal toxicity of the degradation products and a degradation rate that match the recovery rate of the targeted tissue. For all these reasons, the ideal 3D scaffolds have been defined as those with interconnected micro and macrometric pore networks, which would facilitate cell proliferation, the successful formation of new tissues and the proper biodegradation of the implanted material, when required. Of note, those properties mentioned for implantable 3D structures, in example biocompatibility, bioactivity and tissue formation, among others, have to be tested by *in vitro* cell culture and by *in vivo* implantation research processes. 3D porous scaffolds have been prepared from metals, ceramics and polymers. The biodegradable synthetic polymers have attracted high interest, because they provide multiple advantages in order to generate on-demand 3D structures and pore distributions. Among them, poly(glycolic acid) (PGA), poly(L-lactic acid) (PLLA), poly(lactic-co-glycolic acid) (PLGA), and poly(ε-caprolactone) (PCL) biodegradable synthetic polymer materials are the most commonly used ones, due to their availability, inexpensive nature, and suitability to be modified and shaped by multiple chemical and physical methods.

A wide variety of methodologies have been reported to produce porous structures from biodegradable polymers with porous structures ranging from tens of micrometers up to hundreds of micrometers (Wang X. et al. Journal of biomaterials applications. 2016;30:1545-51; Bohner M. et al. Acta biomaterialia. 2011;7:478-84).

These methodologies have been divided into conventional fabrication techniques and additive manufacturing (AM) techniques (Loh QL. et al. Tissue Engineering Part B: Reviews 2013;19:485-502). Conventional techniques comprise phase separation, gas foaming, salt leaching or freeze-drying just to mention few of them. Based on different physical and chemical reactions, these techniques are definitely useful to generate pores in the target materials. However, often fail in the precise control over the pore size, the pore connectivity or the final shape of the fabricated part, and that is why further investigation is still required to better understand and control the obtained pore structure. Moreover, they do not allow the fabrication of complex architectures and particular 3D shapes. As opposed to conventional techniques, additive manufacturing technologies (also known as 3D printing techniques) such as fused deposition modeling (FDM), selective laser sintering (SLS) and stereolithography (SLA), among others, offer unique possibilities to create 3D macroscopic porous structures with high structural complexity and design flexibility (González-Henríquez CM et al. Progress in Polymer Science. 2019;94:57-116; Madrid APM et al. Materials Science and Engineering C. 2019;100:613-44). However, AM techniques do not allow the precise control of the surface or material core porosity.

An interesting approach to generate 3D porous structures with proper and tunable properties is the combination of multiple rapid and precise fabrication techniques (Mohan T. et al. Fundamental Biomaterials: Polymers: Elsevier; 2018. p. 105-41; Mohan T. et al. ACS Applied Bio Materials. 2020;3:1197-209). To the best of our knowledge, only a few recent examples have demonstrated that 3D printing can be combined with other methodologies to produce porous materials with potential interest in tissue engineering (TE) applications, improving, by design, the cell guidance into the three-dimensional (3D) materials (Luo Y. et al. Nature Materials. 2004;3:249-53; Hahn MS. et al. Advanced Materials. 2006;18:2679-84). One of these approaches involves the combination of AM with SCCO₂ to produce large porous 3D structures (hundreds of microns up to mm in resolution) provided by AM with an internal porous structure produced in the solid polymer upon foaming in SCCO₂. The 3D structure was fabricated by FDM and introduced in a SCCO₂ reactor to further induce the internal porosity. However, this approach presented several limitations. First of all, the SCCO₂ swells the polymer to induce the porosity and thus significantly modify the dimensions of the 3D printed part. Secondly and most importantly, some polymers and this is particularly the case of PCL present a rather low melting point. In these cases, the experimental conditions for the foaming process need to be precisely controlled and the temperature that can be employed is a clear limitation. Too low temperatures do not permit the CO₂ to swell the polymer and thus form only partially porous structures. Too high temperatures melt the polymer and the 3D printed structure is completely deformed.

To avoid this drawback, other groups employed the water-soluble poly (vinyl alcohol) (PVA) blended with the desired polymer to generate the internal porous structure. Song et al. (Song P. et al. Composites Part B: Engineering. 2018;152:151-9) described the preparation of a PLA based filament with poly (vinyl alcohol) (PVA) that was employed to fabricate scaffolds by FDM that upon gas foaming and selective solvent etching produced porous scaffolds.

None of the previous examples, however, were able to control the surface porosity. In this sense, it has been reported the preparation of porous polymeric scaffolds of the synthetic poly (isopropylideneglycerol methacrylate) (PIPGMA) combining supercritical CO₂ (SCCO₂) and the breath figures technique (BF) (Sanz-Horta R. et al. The Journal of Supercritical Fluids. 2021;167:105051; Castaño M. et al. ACS omega. 2018;3:12593-9), providing superficial porosity to the polymeric sample. However, none of these examples take into account the variation of the dimensions of the 3D printed object upon foaming.

In order to overcome the inconveniences of the prior art procedures to obtain 3D scaffolds, the present invention proposes a process that allows the design and generation of tailor-made 3D structures with tunable and interconnected surface and internal pores.

### SUMMARY OF THE INVENTION

The present invention discloses a novel methodology based on the scaffold fabrication by a dual extrusion fused deposition modelling printing (FDM) that enables to straightforwardly fabricate almost any 3D CAD (computer-aided design) design. More specifically, the present invention describes a process that uses multimaterial fused deposition modelling (FDM) to generate poly (vinyl alcohol) (PVA) sacrificial moulds filled partially with poly (8-caprolactone) (PCL) to generate well-defined PCL 3D objects. Further on, the supercritical CO₂ (SCCO₂) technique, as well as the breath figures mechanism (BFs), were additionally employed to fabricate specific porous structures at the core and surfaces of the 3D PCL object, respectively. The biocompatibility of the resulting multiporous 3D structures was tested *in vitro* and *in vivo,* and the versatility of the approach was assessed by generating a vertebra model fully tunable at multiple pore size levels. In sum, the combinatorial strategy to generate porous scaffolds offers unique possibilities to fabricate intricate structures by combining the advantages of additive manufacturing (AM), which provides flexibility and versatility to generate large sized 3D structures, with advantages of the SCCO₂ and BFs techniques, which allow to finely tune the macro and micro porosity at material surface and material core levels.

Then, a first aspect of the present invention relates to a process to prepare porous 3D polymeric structures, comprising the following steps:
a) 3D co-printing of two materials:
   - a first material consisting of poly(vinyl alcohol) (PVA) and conforming an external sacrificial mould, wherein said mould comprises at least two holes, and
   - a second material:
      consisting of a polymer or of a blend of polymers having a Glass Transition Temperature (Tg) below the Tg of the PVA used as the first material or
      consisting of a blend of a polymer having Tg below the Tg of the PVA used as the first material with polyethylene glycol (PEG) or with an additive selected from a non-water soluble inorganic salt, graphene oxide or a calcium phosphate mineral, said second material partially filling the inner cavity of the external sacrificial mould.
b) contacting the mould partially filled with the second material obtained in step a) with supercritical CO₂ (SCCO₂), to induce the direct formation of micropores in the second material,
c) dipping the mould containing the second material obtained in step b) in water to dissolve the mould of PVA, so that the second material structure is released, and
   when the second material referred in step a) consists of the polymer (single polymer) or consists of a blend of a polymer with a non - water soluble inorganic salt or graphene oxide the following step d) is required:
d) creating microporous structure surface on the second material by using the Breath Figures approach, thus obtaining the corresponding porous 3D polymeric structure.

The process of the present invention allows to obtain 3D structures with multiscale porosity, that is 3D structures with micropores and macropores. Generally, the micropores in the structure prepared have a size between 50 and 500 µm, and the macropores between 200 and 2000 µm. The micropores are obtained by SCCO₂ foaming process whereas macropores can be obtained through the 3D designing process with the corresponding software. More precisely, the macropores are related to the design obtained using a CAD software. Micro and macropores were measured by analysing the 3D internal structures by means of Scanning Electron Microscopy (SEM) (for pores in the surface) and Micro computerized tomography (Micro-CT) (for internal pores), measuring the pore average sizes with the ImageJ^{®} software.

Step a) is carried out by Fused deposition modeling (FDM) 3D printing, also known as fused filament fabrication (FFF). FDM, is an additive manufacturing (AM) process within the realm of material extrusion. FDM builds parts layer by layer by selectively depositing melted material in a predetermined path, and uses thermoplastic polymers that come in the form of filaments. In order to carry out FDM 3D printing, a multimaterial FDM 3D printer is preferably used. This kind of printers are commercially accessible. Different brands have developed this kind of 3D printers including Raise 3D, Ultimaker or Makerbot just to mention few of them. The printers allow to design the form of the mould and control the printing parameters.

In this step a), printing process occurs layer by layer using a dual extruder enabling the simultaneous fabrication of the mould and the incorporation layer by layer of the second material inside of the mould. The first layers correspond to the base of the mould are entirely printed in PVA. The form of the mould can be designed in the desired form.

Improvements on the design of the mould were done by reinforcing the mould by increasing the number of shells. Then, in a preferred embodiment, the printed mould comprises at least two shells.

Glass Transition Temperature (Tg) is the temperature at which an amorphous polymer changes from a hard/glassy state to a soft/leathery state, or vice versa.

In a preferred embodiment, the polymer having Tg below Tg of PVA are selected from: poly-ε-caprolactone (PCL), poly lactic-co-glycolic acid (PLGA), polyhydroxybutyrate (PHB), polybutylene succinate (PBS) or polydioxanone (PDX).

In a preferred embodiment, the non-water soluble inorganic salt is NaCl.

In a preferred embodiment, the calcium phosphate mineral is hydroxyapatite.

In a more preferred embodiment, the second material consists of PCL or of a blend of PCL and another polymer selected from PEG or PLGA.

In a preferred embodiment, the second material is a blend of PCL and an additive, wherein the additive is preferably selected from: NaCl, graphene oxide or hydroxyapatite.

In the case of blends that comprise PCL, the wt. % of PCL in the blend ranges from 10 to 99.5 wt. %, more preferably from 50 to 90 wt. %.

If the second material is a blend, the blend of is prepared by mixing the components previously to step a), said mixture is prepared by having the polymer/s. in molten.

The holes in the mould enable the SCCO₂ to diffuse within the second material, facilitating the foaming process of step b), therefore, said holes are configured to allow the diffusion of the SCCO₂ inside the mould. Equally, these holes will permit the excess of foamed material to leave easier.

The internal part of the mould is only partially filled with the second material. The rationale behind this choice is twofold. On the one hand, during the SCCO₂ process and, more precisely, during the depressurization step the second material volume increases and will accommodate to the internal surface of the mould. On the other hand, leaving an empty space around the second material printed will improve the SCCO₂ diffusion in step b), thus enhancing the foaming process. In addition, a complete filling of the mould will decrease the CO₂ diffusion and provoke an inhomogeneous foaming process. In a preferred embodiment, the second material occupies between 40 and 80 % of the volume inside the mould, more preferably 50%.

In a preferred embodiment, PVA is printed at temperatures between 190 and 220ºC, but preferably at 215ºC and/or at a speed of between 10-60 mm/s, more preferably 40 mm/s.

In a preferred embodiment, the second material is printed at temperatures between 130 and 170ºC, more preferably at 135ºC and/or at a speed of between 10-30 mm/s, more preferably 20 mm/s.

SCCO₂ foaming is a process known in the prior art to induce the direct formation of micropores in a polymer (Montjovent MO et al. Journal of Biomedical Materials Research Part A. 2007;83:41-51; Montjovent MO et al. Tissue engineering. 2005;11 :1640-9; Kim Y-H. et al. Journal of Cellular Plastics. 2013;49:131-45). As PVA has higher glass transition temperature (Tg) than the second materials, the second material can be foamed without affecting the material of the mould. The second material foaming will take place inside the PVA mould, accommodating to its precise dimensions so that the second material porous structure or scaffold will be shaped to the mold to which it is adapted.

In a preferred embodiment, the temperature for the SCCO₂ foaming instep b) is between 35 and 135ºC and/or the pressure of the SCCO₂ is between 60 and 450 bar (6 to 45 MPa).

In a preferred embodiment, the second material consist of PCL or of a blend of PCL and another polymer selected from PEO, PLGA, PHB, PBS or PDX, more preferably PEO, PEG, PLGA, and the temperature for the SCCO₂ foaming instep b) is between 35 and 50ºC and/or the pressure of the SCCO₂ is between 100 and 250 bar (10 to 25 MPa).

In a preferred embodiment, the second material consist of PCL and the temperature for the SCCO₂ foaming instep b) is between 40 and 50ºC and/or the pressure of the SCCO₂ is between 150 and 250 bar.

In a preferred embodiment, the second material consist of second material is a blend of PCL and an inorganic additive selected from: NaCl, graphene oxide or hydroxyapatite. and the temperature for the SCCO₂ foaming instep b) is between 50 and 100ºC and/or the pressure of the SCCO₂ is between 80 and 180 bar (8 to 18 MPa).

In a preferred embodiment, the second material consist of PCL and the temperature for the SCCO₂ foaming instep b) is between 40 and 50ºC and/or the pressure of the SCCO₂ is between 150 and 250 bar.

In a preferred embodiment, the second material consist of a polymer selected from: PHB, PLGA, PBS or PDX, and the temperature for the SCCO₂ foaming instep b) is between 35 and 130ºC and/or the pressure of the SCCO₂ is between 10 and 450 bar (2 to 45 MPa).

In a referred embodiment, the foaming steps b) is carried out during a time between 1 to 5 h, more preferably 1.5 h to ensure an equilibrated CO₂ saturation within the polymer (PCL) matrix.

In a preferred embodiment, the SCCO₂ is removed after the foaming step and before step c). This removal is preferably performed by simply depressurization and without the use of organic solvents.

Once the foaming step has been carried out, the sacrificial PVA mould is dissolved just by dipping the entire part in water (step c)). In a preferred embodiment, step c) is carried out by dipping the mould containing the second material in water at temperatures under the melting temperature of PCL, that is, 60ºC and above room temperature. Preferably, step c) is carried out above 20 ºC and below 60 ºC. More preferable step c) is carried out between 20 and 25ºC. Step c) is preferably carried out for 6 to 48 h depending on the size of the 3D printed part, more preferably for 6 to 24 h and, even more preferably, for 24 h to ensure completely PVA dissolution.

Once the second material scaffold have been released (by dissolving the sacrificial mould), step d) is required when the second material is a single polymer (not a blend) or is a blend with a non-water-soluble additive, because the microporous parts obtained upon foaming are prone to form a solid layer (Sanz-Horta R. et al. The Journal of Supercritical Fluids. 2021 ;167:105051; Castaño M. et al. ACS omega. 2018;3:12593-9). As has already been described in the literature, a major still remaining issue in the use of SCCO₂ for the preparation of porous materials relies on the formation of the so-called skin layer that prevent from obtaining entirely porous materials. In order to overcome this issue, they resort to the use of the Breath Figures approach (BFs) (to produced interconnected (internal-external) porous parts. The Breath Figures approach has been widely employed for the fabrication of porous surfaces. This approach requires a volatile solvent employed to solubilize the polymer used. Then, the solution is typically coated onto a solid support and allowed to evaporate in a moist atmosphere. During the evaporation process the solvent-air interface is rapidly cooled and water vapor starts to condense. The initial condensed vapor is transformed into micrometer size water droplets due to the continuous condensation during the evaporation step. Finally, the condensed water droplets are equally evaporated leaving behind a reflect of their presence in the form of pores.

The Breath Figures approach in step d) is preferably carried out by immersing the second material structure obtained in step c) in a solvent wherein second material is partially soluble for a preferred time between 1 and 15 s. Then, the second material structure is dried in a moist atmosphere having relative humidity above 70%, preferably 100%. A solvent wherein the second material is partially soluble is preferably selected from the list comprising: CHCl₃, tetrahydrofuran (THF) and acetone. In a preferred embodiment, this Breath Figures approach is carried out at room temperature (20-25ºC).

Step d) can also be carried out whatever the second material is, but, in this case, it is only essential or required in the cases above mentioned.

In summary, a multistep methodology has been described in order to prepare tailor made 3D microporous scaffolds using PCL, a biocompatible polymer. The strategy involves the fabrication of a 3D printed mould using PVA (water soluble) in which, during the layer-by-layer process, the mould has been partially filled with PCL. A subsequent foaming step allowed us to produce microporous structures inside the mould that are accommodated to the internal structure (designed by CAD). A simple immersion in aqueous solution permitted to completely remove the mould and, therefore, the PCL microporous structure is recovered. Finally, a simple surface treatment using preferably the Breath Figures approach provides surface pore structure formation. Following this approach, the final 3D shape and the internal and external porosity can be finely tuned just varying the 3D design and fabrication parameters within the defined ranges.

Interestingly, the scaffolds produced by this method are biocompatible in terms of *in vitro* cell culture conditions and allow proper *in vivo* osteoinduction, indicating they could be potentially useful for the generation of porous structures with bone tissue formation purposes.

The strategy proposed can be extrapolated to a wide myriad of structures and can be applied using other biocompatible materials, opening unique opportunities to generate fully customized scaffolds with potential to be applied in multiple biomedical fields.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples and drawings are provided by way of illustration and are not intended to be limiting of the present invention.

### DESCRIPTION OF THE DRAWINGS

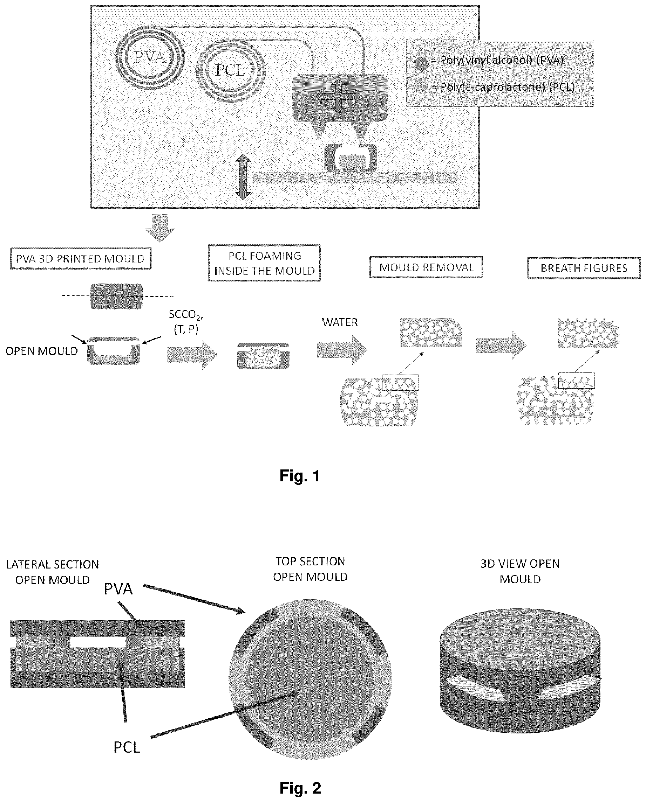

**Fig. 1****.** Illustrative scheme of the 3D-printing based PCL scaffold fabrication using PVA moulds. The mould was foamed by using supercritical CO₂ and finally the PVA removed by dissolution in water.
**Fig. 2****.** Illustration of lateral and top sections and a 3D view of a mould employed to optimize the foaming conditions (Open mould refers to a mouls comprising holes).

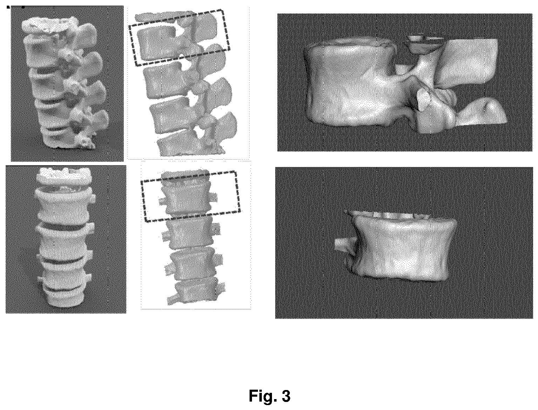

**Fig. 3****.** Different views of a real spinal cord and example of selection of a single vertebra using the Meshmixer software.

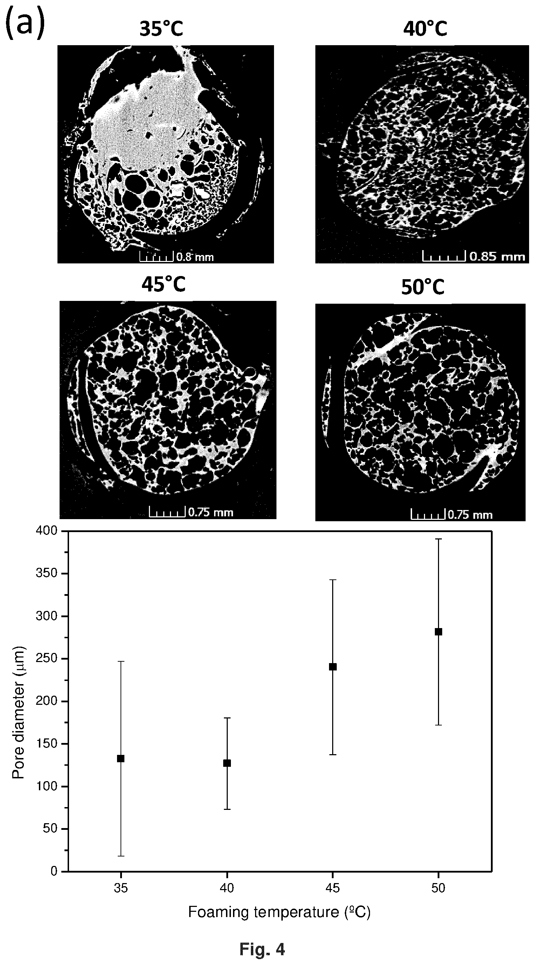

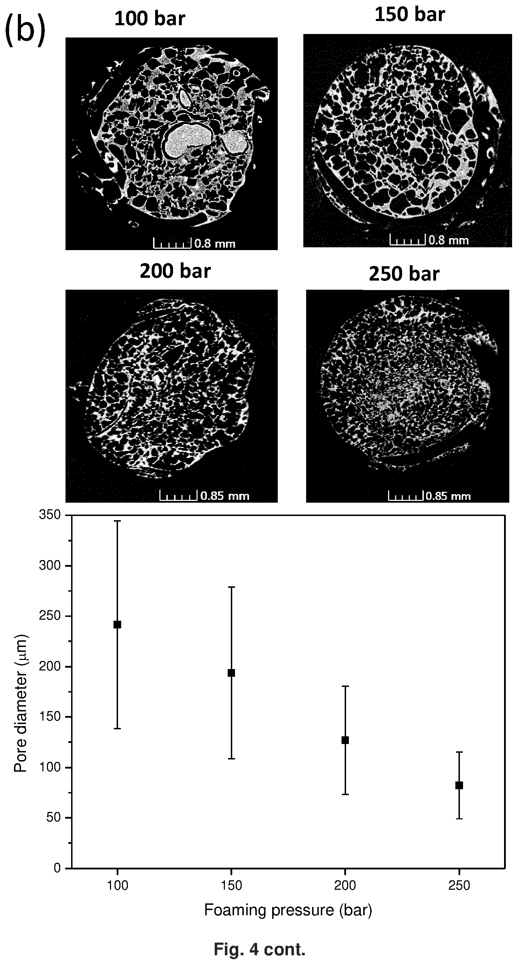

**Fig. 4****.** Porous PCL samples (structures) obtained with open PVA moulds. (a) Left: Micro-Computerized Tomography (CT) cross-sections of samples treated at different foaming temperatures: 35°C, 40°C, 45°C and 50°C. Right: Representation of the average pore size as a function of supercritical CO₂ foaming temperature. (b) Left: Micro-Computed Tomography (CT) cross-sections of screw foamed shaped fabricated in PCL (open mould, which is a mould with holes) treated at different foaming pressures (from 100 bar up to 250 bar). Right: Representation of average pore size as a function of supercritical CO₂ foaming pressure (n=20).

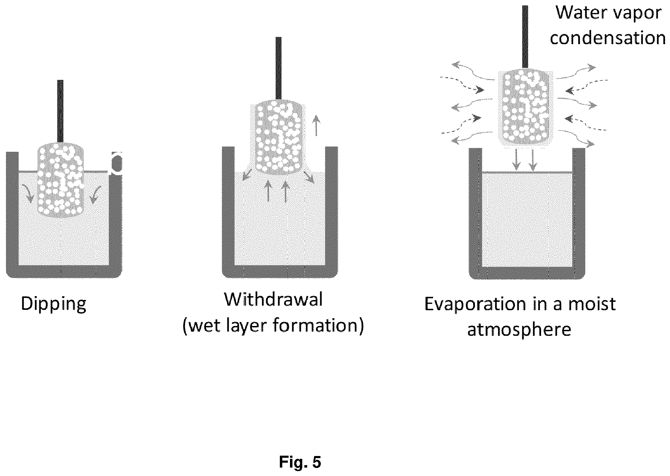

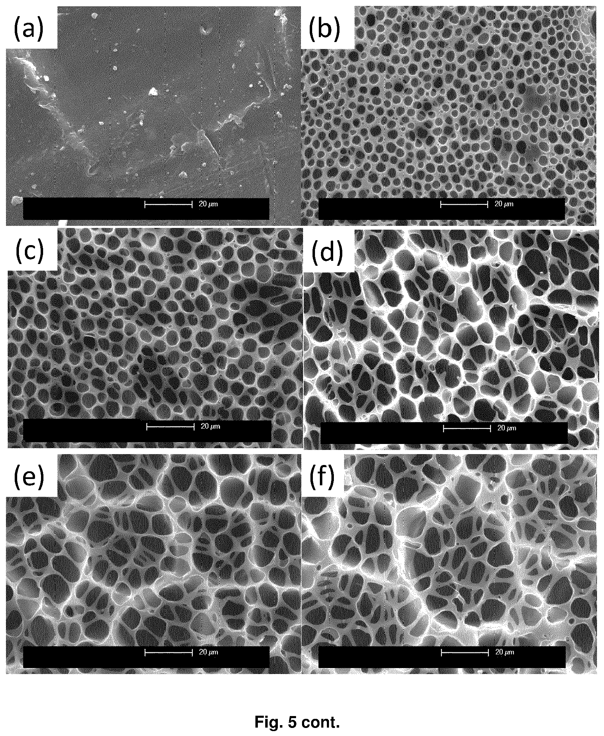

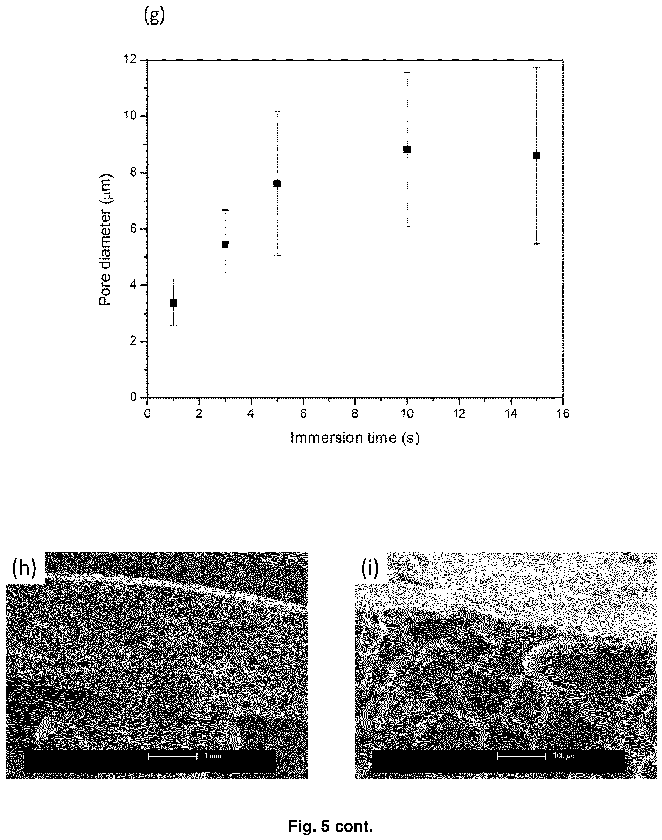

**Fig. 5****.** Achievement of surface porosity at PCL using breath figures approach. Schematic representation of the dip coating process carried out to obtain surface pores and, therefore, parts with interconnected porosity. SEM images for surfaces treated by breath figures at different immersion times in chloroform (CHCl₃): (a) 0s, (b) 1s, (c) 3s, (d) 5s, (e) 10s and (f) 15s. (g) Representation of the pore size as a function of immersion time. (h) and (j): cross-sectional SEM images evidencing the pore interconnectivity.

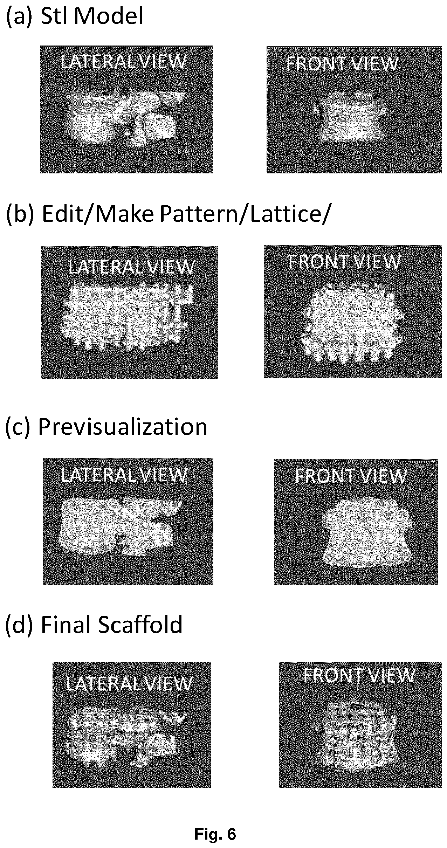

**Fig. 6****.** Process followed to obtain the scaffold structure to be fabricated.

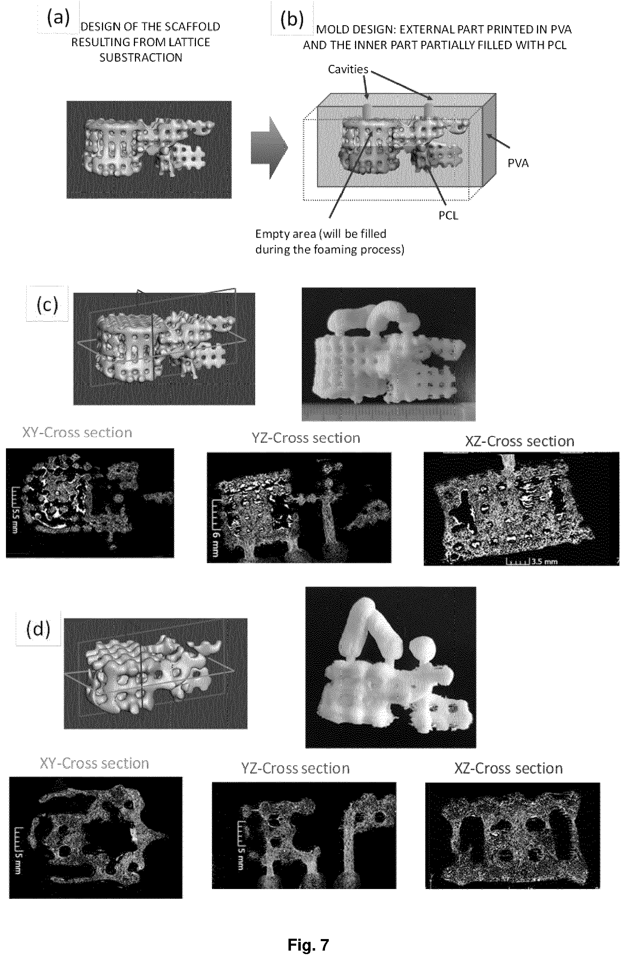

**Fig. 7.** (A) and (B) Schematic illustration of the approach to design tailor-made scaffolds with multiscale porosity. Fabrication of the 3D printed PVA mould, foaming of PCL inside of the PVA mould. (C) Vertebra biomodel with small macroporosity foamed by open mould strategy. (D) Vertebra biomodel with large macroporosity foamed by open mould strategy.

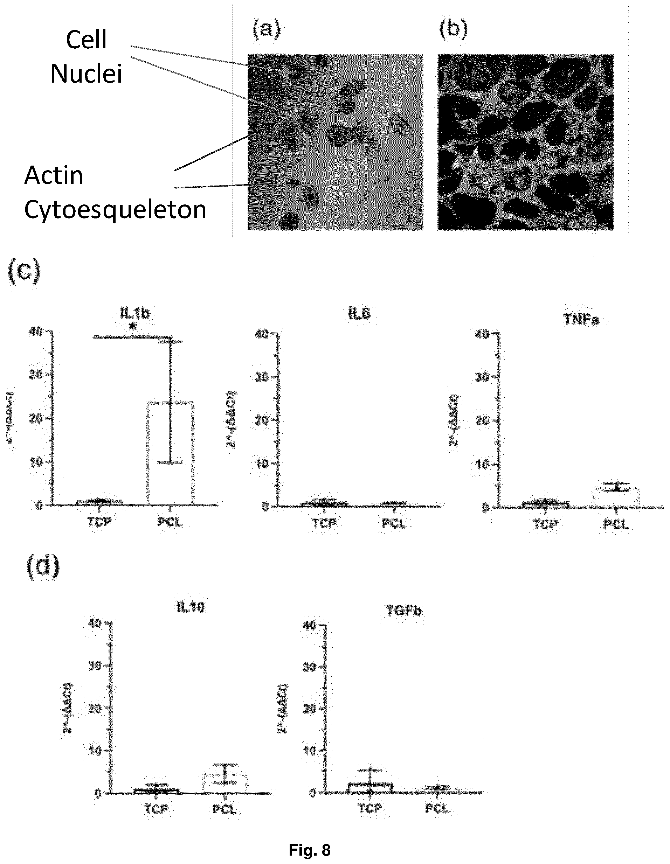

**Fig. 8****.** *In vitro* RAW264.7 cell culture testing. (a-b) Confocal microscopy reflection images showing cell morphology observed as actin cytosqueleton and cell nuclei staining at cells (a) cultured in control plastic surface (TCP) and (b) porous PCL material. Note cells deep inside the pores and also between pores. (c-d) Gene expression study of (c) pro-inflammatory markers and (d) anti-inflammatory markers. In all cases n=3 (* p < 0.05).

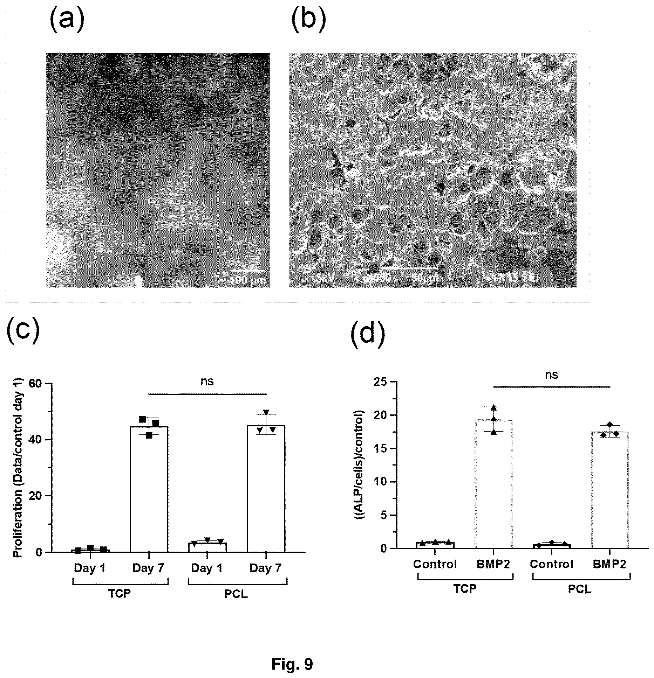

**Fig. 9****.** Adhesion and differentiation study of MS5 mouse bone marrow derived stroma cell line. (a) Confocal microscopy transmission image showing cell morphology study observed as actin cytosqueleton and cell nuclei staining at porous PCL material. Material pore structure is observed as background (b) SEM imaging of cell-seeded porous PCL material. Note most of the surface pores are covered by cells. (c) Quantitative cell proliferation data provided normalized to data at day 1 of culture (Day 1; Day 1 of culture. Day 7; Day 7 of cell culture; TCP; Tissue culture plastic). (d) Induction of osteogenic differentiation by BMP-2 treatment and quantification of Alkaline phosphate activity (ALP) as early osteogenic marker (BMP-2; cells treated with BMP2. Control; cells not treated with BMP2. TCP; Tissue culture plastic) (Data are provided normalized to the number of cells and to the data at control). In all cases n=3 (ns, no significant p > 0.05).

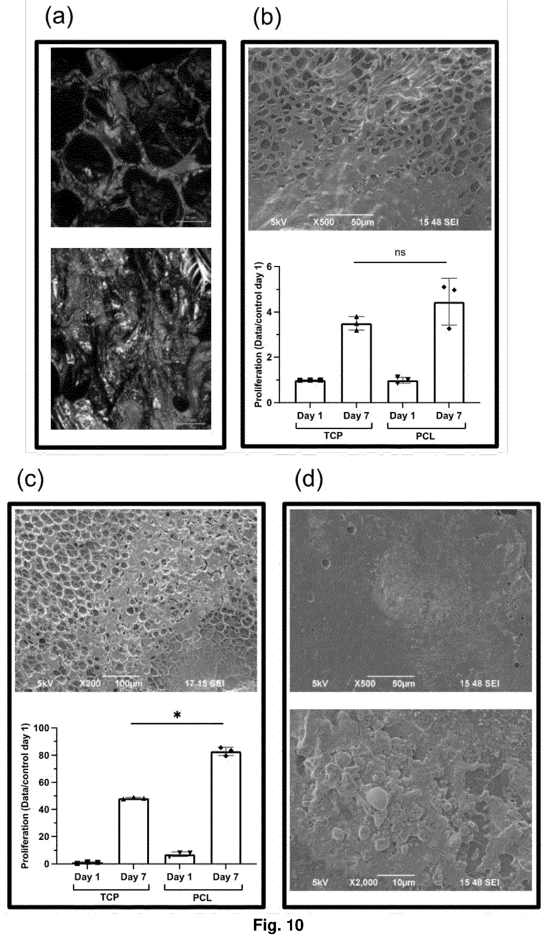

**Fig. 10****.** Morphology and proliferation of different bone mesenchymal progenitor cells on porous PCL materials. (a) Confocal microscopy reflection images showing the morphology of MS5 mouse bone marrow derived stroma cell line at low concentration and at confluence, covering all the surface. (b) Primary human bone marrow derived mesenchymal cells (hMSCs) observed at SEM at medium confluence covering most of surface PCL material pore pattern. Graphic shows quantitative cell proliferation data provided normalized to data at day 1 of culture (Day 1; Day 1 of culture. Day 7; Day 7 of cell culture; TCP; Tissue culture plastic). (c) MC3T3-E1 pre-osteoblastic mouse cell line. SEM imaging and quantitative proliferation data as described above. (d) SEM images of bone progenitors ar confluence covering the full pore pattern of the PCL material. In all cases n=3 (ns, no significant p > 0.05, * p < 0.05).

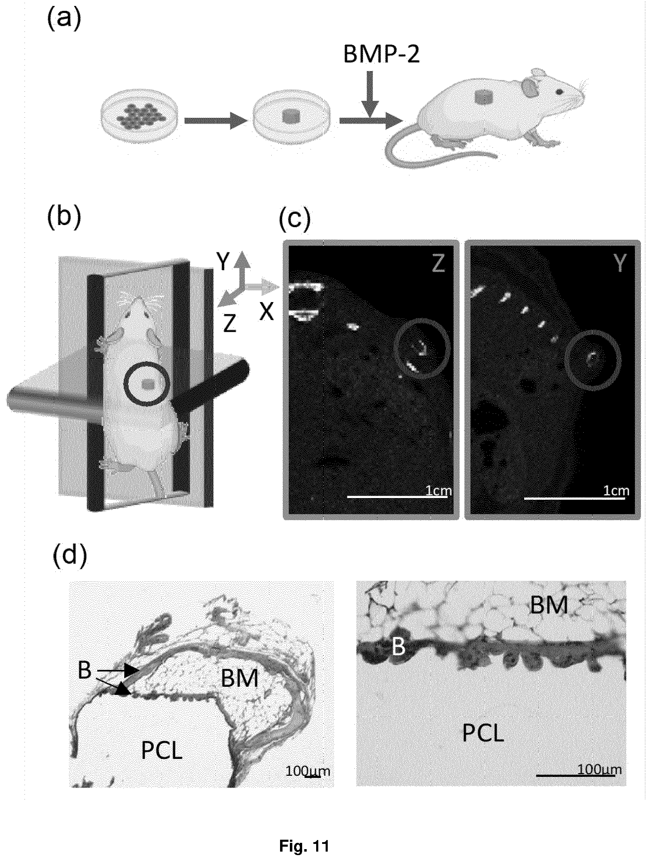

**Fig. 11****.** *In vivo* testing of fabricated porous PCL scaffolds. (a) Schematic of sample preparation, implantation process and anatomical location. (b) Schematic of an animal at computerized tomography and the different planes of the obtained 3D reconstructed images. (c) Z and Y planes of one of the implanted animals. Red circle indicates the location of the implanted material observed as a white ossicle in the subcutaneous tissue, with a similar bone intensity to the ribs also observed in the images. (d) Hematoxilin and Eosin staining of histology slides provided at low (left) and high (right) magnification images. Note at high magnification image a thin layer of bone formed at the material surface with multiple bone tissue invaginations formed inside the PCL material surface pores (PCL; Area of the implanted PLC material. B; Bone tissue indicated with arrows. BM; Bone marrow tissue) (n=3).

### Examples

### Example 1: Preparation of a PCL scaffold through the process of the present invention

### 1. Experimental Part

### Materials

Facilan^{™}PCL100 poly (ε-caprolactone) (PCL) filament of 1.75 mm diameter was purchased from 3d4makers (Haarlem, The Netherlands) and natural poly (vinyl alcohol) (PVA) (Mowiflex - Kurakay Poval) 1.75 mm diameter filament was purchased from Impresoras3D. Liquid carbon dioxide was supplied by Carburos Metálicos (Cornella de Llobregat, Spain) with a 99.99% purity, and chloroform (CHCl₃) was supplied by Sigma Aldrich.

### Methods

### Fabrication of 3D printed PVA moulds partially filled with PCL.

Parts were designed on the Autodesk Inventor 2018 CAD software obtaining a .stl file that was later processed on IdeaMaker version 3.3.0 to obtain a .Gcode file in which printing parameters were defined for the 3D printing process as is shown in Table 1. The 3D printed parts were fabricated using a Raise3D Pro 2 FDM 3D printer equipped with a dual extruder and a 0.4 mm diameter nozzle was used for the printing process. The moulds fabricated in PVA and partially filled with PCL were designed separately and combined in the IdeaMaker slicer software in order to generate a single file that enables the fabrication of the part with both materials simultaneously (see Figure 1). It is important to note that the internal part of the mould was only partially filled with PCL (**Fig. 2**). The rationale behind this choice is twofold. On the one hand, during the SCCO₂ process and, more precisely, during the depressurization step the PCL volume increases and will accommodate to the internal surface of the mould. On the other hand, leaving an empty space around the PCL printed part will improve the CO₂ diffusion thus enhancing the foaming process. In addition, a complete filling of the mould will decrease the CO₂ diffusion and provoke an inhomogeneous foaming process.

**Table 1. Parameters employed for the 3D printing of PCL and PVA**

| | **PVA** | **PCL** |
|---|---|---|
| **Printing temperature (ºC)** | 215 | 135 |
| **Speed (mm/s)** | 40 | 20 |
| **Layer height (mm)** | 0.2 | 0.2 |
| **Material Flow (%)** | 100 | 100 |
| **Fan (%)** | 100 | 100 |

An open mould (mould with holes) was prepared in order to allow the excess of foamed PCL to escape and also permits an improved diffusion of the CO₂ inside de mould. A disk-shaped mould with dimensions of 1 0x10x2 mm was designed for breath figures analysis and for culture experiments.

### Supercritical CO₂ foaming of internal parts of moulds

The foaming process was carried out as follows: multimaterial 3D printed parts were detached from the heated bed and placed in a Thar R1 00W supercritical CO₂ reactor. CO₂ was pumped to a 4ºC precooled high-pressure pump. Reactor temperature was set at 40ºC and monitored by a thermocouple, while pressure was regulated by the automatic back pressure regulator (ABPR). Both parameters can be varied in order to modify porosity and pore size. A typical supercritical CO₂ foaming starts by opening the CO₂ tank that has a predetermined pressure of 60 bar. Firstly, pressure raises gradually from 60 to 200 bar during 10 min. When the reactor reached the fixed foaming pressure, the conditions were stabilized at 200 bar for 90 minutes. After this stabilization step, depressurization stage proceeds by decreasing the pressure from 200 to 0 bar in 5 minutes in which the PCL parts foamed.

*Foaming process using open moulds (moulds with holes):* improvements on the design of the mould were done by reinforcing the mould by increasing the number of shells, and introducing holes that enables the CO₂ to diffuse within the PCL facilitating the foaming process. Equally, these holes will permit the excess of foamed material to leave easier. The experimental processing parameters (temperature and pressure) employed for the supercritical CO₂ foaming (Tª 35-50ºC and P 100-250bar) were varied to investigate the role of these two parameters on both porosity and average pore size.

After the foaming process, the PVA mould was removed by immersing the entire part in water using a moderate agitation. The removal was allowed to proceed overnight at room temperature.

### Surface treatment with the Breath Figures approach to form micrometer sized porous surfaces

The Breath Figures approach was employed to induce the formation of microporous surfaces on the 3D printed scaffolds. This step was required since the microporous parts obtained upon foaming are prone to form a solid layer. The surface porosity was obtained by this approach by immersing samples in CHCl₃ during different times (1-15 s) and then drying under saturated relative humidity (100%) conditions at room temperature in a closed chamber.

### SEM (Scanning Electron Microscopy)

Samples treated by SCCO₂ were fractured to analyze their cross-section by scanning electron microscopy SEM (XL30ESEM Philips, North Billerica, MA, USA) at an acceleration voltage of 25 kV. Images taken by SEM were analyzed by imaged (NIH, USA), a Java-based image-processing program, to measure pore size of 20 different pores for each sample, pore morphology, and foamed region.

### Computerized Tomography (Micro-CT)

Micro X-ray computerized tomography with the unit CT-SCAN-XT-H-160 (NIKON, Tokio, Japan) was used for the study of the interconnectivity of the pores as well as the internal structure of the samples. PCL foamed parts fabricated in closed and opened moulds were analyzed (using VGStudio Max 2.2) to obtain a volumetric 3D reconstruction of the whole sample with a range of colors that defines the interconnectivity between pores.

### Proof of concept of the preparation of multiporous 3D structures inspired on real biological models

In order to illustrate the potential of the presented approach to prepare complex porous scaffolds, a biological example, a vertebra, was employed. As depicted in **Fig. 3****,** using the Meshmixer software, a single vertebra was selected and subtracted, aiming to use it as the raw file from which fabricate a fully customized porous vertebra. Two types of porosity were created in this part. On the one hand, by using the patterning tool of Meshmixer it is possible to create an internal lattice that can be subtracted from the solid form. This lattice can be designed with controlled line thickness and distance between the lines. As a result, the final structure **(****Fig. 6****)** of the scaffold present a porosity directed by the design.

This design with the tailor-made porosity was introduced in Meshmixer to create the corresponding mould. The mould was created by introducing a solid cube and subtracting the mentioned scaffold design. The mould was designed with two holes on top of the structure to allow the CO₂ of the further SCCO₂ treatment to easily enter in the scaffold structure and form the micropores. The mould structure was printed in a water-soluble thermoplastic, i.e. poly (vinyl alcohol). However, the internal part of the mould need, additionally, to contain PCL. For this purpose, using a two-material 3D printer the entire mould is printed with PVA and half filled with co-printed in PCL. Thereafter, the samples were treated with SCCO₂ to be foamed for 90 min at 200 bar and 40ºC. The depressurization step was carried out by gradually decreasing the pressure for 5 min. Finally, the part was immersed in distilled water to dissolve the mould overnight as indicated previously.

### Cell cultures

Cell cultures were manipulated under standard sterile conditions and cultured at 37ºC and at 5% CO₂ atmosphere. In all cases, adherent cells were used, and cell subculture was performed at 80% confluence by trypsinization (25200056; Gibco, UK). Regarding cell lines, MS5 mouse bone marrow derived stroma cell line (RRID: CVCL_2128) was cultured in DMEM media (61965240; Gibco, UK); MC3T3-E1 Subclone 4 pre-osteoblastic mouse cell line (RRID: CVCL_0409) was cultured in MEM Alpha media (A10490-01; Gibco, UK); RAW 264.7 mouse macrophage cell line (RRID: CVCL_0493) was cultured in DMEM media (61965240; Gibco, UK). All media used to culture cell lines were supplemented before being used with fetal bovine serum at final concentration of 10% (10500-064; Gibco, UK) and with antibiotics at final concentration of 100 U/ml penicillin and 100 µg/ml streptomycin sulphate (15070063; Gibco, UK). Additionally, mouse and human primary bone derived cell cultures were used. Human bone marrow derived primary mesenchymal stromal cells were commercially obtained (PT-2501; Lonza, Switzerland) and cultured in their specific media (PT-3001; Lonza, Switzerland). Mouse bone progenitors were obtained from tibia and femur bones according to previously reported methods (Chan CK et al. Cell. 2015;160:285-98; Gosset M. et al. Nature protocols. 2008;3:1253-60) and then cultured in MEM Alpha media (A10490-01; Gibco, UK) supplemented with FBS and antibiotics as previously indicated. Primary cells yield finite cultures, so they were used only in their first 20 days of the cell culture.

### Preparation of cell-seeded PCL scaffolds for in vitro cell culture studies

Pieces of 5 mm in diameter were used for the experimental *in vitro* cell culture assays. Each scaffold was deposited in a well of standard sterile polystyrene tissue culture treated 24-well plates (CLS3524, Merck, Germany) and then sterilized using UV radiation for 30 mins. Cells were diluted in their specific media at 2×10⁶ cells/ml and then 5×10⁵ cells were carefully deposited on top of each structure. Cell-seeded samples were cultured in standard conditions for 2-4 hours to allow initial cell attachment to the material. Then, specific media was added to each cell culture until covering the entire scaffold and cultured in standard conditions. In parallel, in all assays the same number of cells were seeded in empty wells to be used as control cells grown in standard tissue culture plastic (TCP). Before each test, cell-seed PCL samples were transferred to fresh wells.

### Cell adhesion and morphology studies

For morphological studies, cell-seed samples were fixed with formalin 10% (HT501128; Merck, Germany) at day 1 and day 7 after the starting of the cell culture. Actin filaments were stained with ActinRed^{™} 555 ReadyProbes^{™} reagent (R37112, ThermoFisher, USA) and DAPI (D8417, Merck, Germany) diluted 1:2000 in PBS (BE17-512Q, Lonza, USA) was used as counterstaining to see the nucleus. A Carl-Zeiss LSM 510 confocal microscope (objective: Plan Neofluar 20x; NA 0.5; Air; Working distance 0.61 mm) was employed to visualize cells. Further image processing and analysis were done using Zen 2012 Blue Edition Software (Carl-Zeiss, Germany).

For SEM studies, cell-seed samples were fixed using 2.5% glutaraldehyde for 15 min, dehydrated with ethanol and HDMS hexamethyldisilazane (TS-84770, ThermoFisher, USA), and allowed to dry at room temperature overnight. Samples were mounted and sputter coater (Alto 1000, Galan) was used to coat samples with gold/palladium before visualization at 15kV in a JSM-6490LV SEM equipment.

### Gene expression studies

Primers for target genes were designed using primer-BLAST primer design tool (NIH, USA) (Table 2) and purchased (Merck, Germany). RNeasy Plus Mini Kit (74134; Qiagen, Germany) was used to remove gDNA from target samples and isolate total RNA according to the producer's instructions. RNA concentration was measured using a spectrophotometer (NanoDrop; Thermofisher, USA). RNA was reverse transcribed to cDNA and prepared for RT-PCR reaction using the GoTaq(R) 2-Step RT-qPCR kit (A6010; Promega Biotech Iberica, Spain) and based on the manufacturer's indications. All the reactions were prepared in a final volume of 20 µL and they were conducted in triplicates. Real time PCR was performed (CFX Connect Real-time PCR detection system; Biorad, USA) and gene expression was quantified by using the 2-ΔΔCt method. That mean gene expression level of each target gene is provided normalized to the housekeeping gene GAPDH and normalized to data of cells seeded in control cell culture standard plastic surface.

**Table 2. Primer list related to the qPCR studies:**

| **Name** | **Sequence** | **Tm** | **GC content** | **Product Length** |
|---|---|---|---|---|
| **IL-1b-F** | GAAATGCCACCTTTTGACAGTG (SEQ ID NO: 1) | 58.62 | 45.45 | 116 |
| **IL-1b-R** | TGGATGCTCTCATCAGGACAG (SEQ ID NO: 2) | 59.24 | 52.38 | 116 |
| **IL6-F** | CTGCAAGAGACTTCCATCCAG (SEQ ID NO: 3) | 58.37 | 52.38 | 131 |
| **IL6-R** | AGTGGTATAGACAGGTCTGTTGG (SEQ ID NO: 4) | 59.23 | 47.83 | 131 |
| **TNFα-F** | CAGGCGGTGCCTATGTCTC (SEQ ID NO: 5) | 60.23 | 63.16 | 89 |
| **TNFα-R** | CGATCACCCCGAAGTTCAGTAG (SEQ ID NO: 6) | 60.48 | 54.55 | 89 |
| **IL10-F** | AGAAAAGAGAGCTCCATCATGC (SEQ ID NO: 7) | 58.46 | 45.45 | 104 |
| **IL10-R** | TTATTGTCTTCCCGGCTGTACT (SEQ ID NO: 8) | 59.16 | 45.45 | 104 |
| **TGFβ1-F** | CTGCTGACCCCCACTGATAC (SEQ ID NO: 9) | 59.82 | 60 | 94 |
| **TGFβ1-R** | AGCCCTGTATTCCGTCTCCT (SEQ ID NO: 10) | 60.03 | 55 | 94 |
| **Gapdh-F** | ATGACATCAAGAAGGTGGTG (SEQ ID NO: 11) | 60 | 45 | 177 |
| **Gapdh-R** | CATACCAGGAAATGAGCTTG (SEQ ID NO: 12) | 59,7 | 45 | 177 |

### Cell viability tests

Resazurin reagent-based Deep Blue Cell Viability^{™} Kit (424701; Biolegend, USA) was used to perform quantitative cell studies. This kit measures the number of metabolically active cells (live cells) and therefore is formulated to quantify cell proliferation. Assays were performed following provider indications. Briefly, cell-seeded scaffolds were transferred to wells with fresh media supplemented with 10% of resazurin reagent and samples were further incubated at 37ºC for 150 min. Then, the medium was transferred to a black 96 well plate wells and fluorescence measurement was performed with an excitation wavelength of 535 nm and an emission wavelength of 590 nm (GENios^{™} plate reader; tecan, Switzerland). Blank readouts were subtracted.

### Cell differentiation studies and Alkaline Phosphatase Activity (ALP) measurement

Cell differentiation was induced by adding rhBMP-2 (Noricum SL) to cell culture media at a final concentration of 1 ug/ml. After 7 days, samples were transferred to new wells and ALP was measured using StemTAG^{™} Alkaline Phosphatase Activity Assay Kit (CBA-301; Cell biolabs, USA) and following the indications of the manufacturer. Alkaline Phosphatase Activity data are provided normalized to cell viability data.

### In vivo implantation assay of osteogenic activity

Pieces of 2 mm were used for *in vivo* implantation assays. Scaffolds were sterilized using UV radiation for 30 mins. Scaffolds were cell-seeded with Mouse bone progenitors as previously indicated. The day after, a osteoinductive coating was applied following previous protocols (Abarrategi A, et al. The Journal of clinical investigation. 2017;127:543-8; Abarrategi A. et al. PloS one. 2012;7:e34117). Briefly, each scaffold was allocated in one well of a u-bottom, 96-well plate (174925; Nunclon Sphera 96-Well plate; ThermoScientific, USA) and 5 µL of acetic acid 50 mM reconstituted human recombinant BMP-2 (rhBMP-2; Noricum, Spain) (concentration at 5 µg/µL) were added. Then, 30 µL of 2% CaCl₂ reconstituted thrombin from human plasma (T8885; Merck, Germany) and 30 µL of water reconstituted fibrinogen from human plasma (F3879; Merck, Germany) were incorporated. Clotting was allowed during 10 minutes in cell culture conditions before proceeding with *in vivo* implantation. 10 week-old NOD-SCID mice were used for *in vivo* implantation studies. Anesthesia was induced with 2.5% isoflurane and O at 2-4%. PBS reconstituted analgesic and antiinflamatory Carprofen (Rimadyl; Zoetis, USA) (5 µg/g of animal) was administered subcutaneously. A wide section of fur from the back was shaved. Then, skin was sterilized twice with Povidone-iodine (Betadine, Mylan, USA). For each scaffold implantation, 0.5 cm incision was made in the skin located just on top of the spine of the animal. With forceps, and using the skin-generated incision, a pocket under the skin was made down the side of the animal. A scaffold was inserted, making sure it was placed deep within the pocket, and then the incision was stapled and cleaned with Povidone-iodine (Betadine, Mylan, USA). Anesthesia was removed and animals were supervised until total recovery. PBS reconstituted analgesic and anti-inflammatory Carprofen (Rimadyl; Zoetis, USA) (5 µg/g of animal) was administered subcutaneously every 24 h during 3 days after surgery. Carbon dioxide (CO₂) overdose was used to euthanize the animals 8 weeks after the surgery. Just after euthanasia, CT images were obtained (Molecubes NV, Belgium) and samples were harvested for routine histology, compiling: paraffin embedding, sectioning at 4 µm and Hematoxilin and Eosin staining, and imaging in an optical microscope.

All animals were maintained and handled in accordance with the Guidelines for Accommodation and Care of Animals (European Convention for Protection of Vertebrate Animals Used for Experimental and Other Scientific Purposes) and internal guidelines. Experimental processes were approved by the ethical committee and local competent authorities (Project number PRO-AE-SS-171). All animals were housed in ventilated cages and fed with standard diet *ad libitum.*

### Statistical analysis

Graph Pad Prism software was used to perform the statistical analysis (t-test and ANOVA) (^{ns}, p > 0.05, * p < 0.05, ** p < 0.01, *** p < 0.001). Data are provided as mean and standard deviation.

### 2. Results and Discussion

### 2.1. Strategy for the fabrication of porous scaffolds using sacrificial 3D printed PVA moulds

The fabrication of the foamed 3D parts is illustrated in **Figure 1****.** The fabrication of the mould (in PVA) with PCL inside requires the use of a multimaterial 3D printer. The optimized printing conditions employed for both materials are summarized in **Table 1.** The structure of the mould comprises an external PVA disc with PCL inside. The fabrication process occurs layer by layer using a dual extruder enabling the simultaneous fabrication of the mould and the PCL part inside. Open moulds were equally fabricated maintaining a two-layer shell for all the parts fabricated. As will be described later, the presence of holes in the mould plays a key role on the CO₂ diffusion and therefore in the foaming process.

### 2.2. Investigation of the foaming process inside of PVA open moulds using SCCO₂: cylinders as models for the SCCO₂ foaming process

A first series of experiments were carried out with closed moulds (without holes) in which the number of PVA shells and the foaming conditions were varied. However, these moulds lead to poor control over dimensions, while the mould was partially deformed due to the foaming process.

Previous results with close moulds evidenced that modifications in the mould design are required to obtain entirely porous parts with shape fidelity. In further experiments the structure of the moulds was changed as shown in Figure 1 introducing cavities (holes) that will enable the diffusion of the CO₂ inside de mould and will decrease the stress generated during the foaming process. The number of PVA shells (2 shells) was maintained for all the experiments. Additionally, the PCL incorporated inside the mould was reduced (see **Fig. 2**) in order to improve the CO₂ diffusion and reduce the amount of foamed PCL that will be leaked during the foaming process.

In this series of experiments, both temperature and pressure were varied in order to analyze the implications that these parameters had on the foaming process. As depicted in Fig. 4(a), temperature has a strong influence on the pore size. As temperature approaches the polymer melting temperature (Tm) the average pore size increases as a result of a better diffusion and solubility of CO₂ into the polymer matrix favored by a decrease in the viscosity of the polymer with the temperature. CO₂ can diffuseinto PCL matrix, although not completely, in the foaming process carried out at 35ºC.

In addition to the temperature, pressure was equally varied between 100 and 250 bar in order to elucidate changes on pore size, pore size distribution and dimensional stability of the parts. **Fig. 4(b)** shows the cross-sections obtained by micro-CT for the different PCL samples treated at different pressures while maintaining constant both the depressurization time (5 min) and temperature (40 ºC). As depicted in the graph in **Fig. 4****,** low pressures produced larger and heterogeneous pore sizes. Interestingly, increasing the pressure improved the CO₂ diffusion and solubility into the polymer matrix and increase the number of pore nucleating regions. These pore nucleating regions are responsible for the pore generation during the depressurization process. Thus, an increase of the number of nucleating points will accordingly increase the number of pores and finally will produce a decrease of the pore size improving the homogeneity in terms of pore size distribution.At pressures of 100 bar the foaming process takes place, producing the largest pore sizes (in the range of 250 µm). On the opposite, the smallest pore sizes were obtained at pressures of 250 bar with average pore sizes in the range of 75 µm.

In conclusion, the use of open PVA moulds successfully allowed the fabrication of porous PCL samples perfectly adapted to the PVA mould employed, in which the PCL porosity could be finely tuned by modifying both temperature and pressure during the foaming process.

### 3.3. Control of the surface porosity: formation of porous surfaces using the breath figures approach.

As has already been described in the literature, a major still remaining issue in the use of SCCO₂ for the preparation of porous materials relies on the formation of the so-called skin layer that prevent from obtaining entirely porous materials. In order to overcome this issue, the Breath Figures approach (BFs) is an interesting alterantive to produced interconnected (internal-external) porous parts. The Breath Figures approach has been widely employed for the fabrication of porous surfaces. This approach requires a volatile solvent employed to solubilize the polymer used. Then, the solution is typically coated onto a solid support and allowed to evaporate in a moist atmosphere. During the evaporation process the solvent-air interface is rapidly cooled and water vapor starts to condense. The initial condensed vapor is transformed into micrometer size water droplets due to the continuous condensation during the evaporation step. Finally, the condensed water droplets are equally evaporated leaving behind a reflect of their presence in the form of pores. The Breath Figures process is usually carried out in planar surfaces, however, the formation of porous non-planar surfaces by this approach was achieved using the dip-coating approach instead of a direct solvent casting.

Following the previously reported dip-coating strategy, as depicted in **Fig. 5****,** the foamed PCL parts were immersed in a volatile solvent (in this case chloroform) during a short period of time (few seconds). This immersion allows dissolving the solid skin layer and based on the condensation of water vapor and simultaneous evaporation of the solvent layer porous interfaces can be obtained. Interestingly, in the range of immersion times explored the average pore diameters obtained could be varied between 3 and 10 µm **(****Fig. 5 a-g).** It is worth mentioning that longer immersion times lead to a complete dissolution of the porous PCL part.

The interconnectivity was analyzed by investigating the cross-sections of the parts treated first by SCCO₂ and then by the Breath Figures process. As depicted in **Fig. 5 (h) and (i)** in spite of the differences in terms of pore size between the top layer and the inner bulk material the interconnectivity can be clearly observed. This characteristic is crucial in view of their potential use as scaffolds for tissue engineering purposes.

### 3.4. Elaboration of a 3D multiscale porous biocompatible structure based on a real biological model as proof of concept of the strategy.

As a model to illustrate the strategy, a vertebra model was employed (**Fig. 6**). The starting point is a real model that, by using the appropriate software (typically a segmentation program when the data are obtained from magnetic resonance images) was transformed into a .stl file. This file can be cut and modified in order to select the part to be modelled. In this case, the inventors selected a single vertebra and the selection was carried out using Meshmixer software. Once the part has been selected, it is possible to create a pattern (**Fig. 6**). For this purpose, also Meshmixer allowed us to define an internal pattern within the structure (Fig. 6 - step 2) and remove the pattern generated from the part (Fig. 6 - step 4). As a result, depending on the type of pattern, in this case a lattice, the element dimensions (diameter of the bar) as well as its spacing an internal porous structure can be generated.

Finally, with the 3D model of the scaffold and using Meshmixer it is possible to create a mould **(****Figure 6**). For this purpose, the porous structure is embedded and extracted from a rectangular cuboid. The generated structure corresponds to the mould that will be printed in PVA. However, taking advantage of a dual FDM 3D printer, the inventors can additionally introduce PCL during the printing process. In this case, the amount of PCL was limited to about half of the empty space in the mould since during the foaming process the volume of PCL will significantly increase and fill the entire 3D model volume **(****Figure 7b**). Finally, it is worth mentioning that the mould has also three cavities that enabled the CO₂ diffusion inside the cavities and thus enhance the formation of entirely porous scaffolds.

The evaluation of the porosity of the fabricated parts was investigated by micro-CT. As depicted in **Figure 7****,** by using the optimized conditions depicted above, i.e. 40ºC and 200 bar, continuous porous scaffolds were straightforwardly produced. Two different lattices were explored, with variable spacing and diameter of the bar. Independently of the lattice parameters, in both cases, highly porous scaffolds were observed.

### 3.5. Biological evaluation of the porous PCL scaffolds

The further step in the experimental approach was defining the biological response to the generated PCL porous materials. The biocompatible and biodegradable properties of PCL are well-known (Dwivedi R. et al. Journal of oral biology and craniofacial research. 2020;10:381-8), but the inventors wondered whether the biological systems would have specific responses related to the fabricated porous structure. Moreover, other porous PCL scaffolds have been previously used as a potentially implantable material for bone-related tissue regenerative purposes (Dwivedi R. et al. Journal of oral biology and craniofacial research. 2020;10:381-8). Therefore, the inventors focused the biological evaluation on those processes: 1- The response of the immune cells to the material; 2- The response of the mesenchymal tissue-forming cells to the material, and; 3- The *in vivo* behavior of material in bone tissue formation context.

In order to do that, and following the data obtained in the material fabrication testing study, the samples to be used were designed as 5 mm in diameter circular PCL structures fabricated using open PVA moulds, treated with SCCO₂ using the optimized conditions, i.e. 200 bar and 40 ºC, and breath figure treated during 5 seconds. That design was selected as a simple, standard and easy-to-replicable structure, which allowed us to fabricate the relatively high number of samples required for the *in vitro* and *in vivo* studies.

Whenever a material is designed to be implanted in a tissue, the first aspect to take into account is the potential immune response to the implant, which may lead to the unwanted tissue rejection, or to the expected tissue integration (Civantos A. et al. ACS Biomaterials Science & Engineering. 2017;3:1245-61). At present, multiple research effort is directed to generate immunomodulatory implantable materials, which may induce either pro-inflammatory responses to prevent bacterial infections, or anti-inflammatory responses to reduce implant rejection and induce tissue formation. Among with surface chemical functionalization and biomolecule delivery, surface topography modification has been also studied as a feasible method to trigger immune responses (Lee J. et al. Advanced healthcare materials. 2019;8:1801106; Li Y. et al. Acta biomaterialia. 2018;67:378-92). Therefore, the inventors conducted a serial of studies to define the immune response of generated PCL porous surface. Macrophage cell lines, and specifically RAW264.7 mouse macrophage cell line, are broadly used as *in vitro* cell testing model for materials-related immunomodulatory response testing studies, because macrophages are considered the early responders to biomaterial implantation processes, remaining later on at biomaterial-tissue interfaces. Under inflammatory conditions, macrophages change their morphology and polarization, and they deliver pro-inflammatory cytokines. On the contrary, under anti-inflammatory conditions, macrophages can promote anti-inflammatory environment by delivering appropriate signals (Sheikh Z. et al. Materials. 2015;8:5671-701).

Hence, RAW264.7 mouse macrophage cell line was seeded on scaffolds and analyzed for possible material-related responses. Compared to cells seeded in standard tissue culture plastic (TCP) surfaces shown in **Figure 7(a)****,** the macrophages seeded in porous scaffolds as shown in **Figure 7(b)** did not show any relevant changes in cell polarization or morphology. Interestingly, cells tend to remain preferably attached to the PCL material located between pores, while many others were observed inside the pores **(****Figure 7b****)**), which help us to indicate that the material was biocompatible in terms of early cell adhesion, and to corroborate that the diameter of the pores formed in the surface of the PCL material was in the range of the cell size. Further gene expression studies were conducted in order to define the any induction of pro-inflammatory or anti-inflammatory phenotype due to the seeding in porous PCL structures **(****Figure 7c****-d**). A panel of 3 pro-inflammatory markers **(****Figure 7(c)**) and 2 anti-inflammatory markers **(****Figure 7(d)**) were tested. Data indicate a mild overexpression of IL1b, a pro-inflammatory cytokine, but no other significant change in the expression of the other pro-inflammatory and anti-inflammatory markers tested. Using pHEMA as implantable material, is has been already reported that a surface pore size in the range of 35 µm may trigger a mild pro-inflammatory response of the macrophages present in the material-tissue interface (Sussman EM. et al. Annals of biomedical engineering. 2014;42:1508-16). In any case, the pro-inflammatory response is an acute process involving the overexpression of multiple markers, and therefore, the inventors conclude that a mild IL1b overexpression is not enough to consider the porous PCL as an immunomodulatory material.

Further on, the inventors move to study the behavior of tissue-forming cells on the fabricated porous PCL scaffolds. As the initial consideration is that these materials can be useful for bone tissue regeneration purposes, the inventors selected a group of different bone-progenitor or pre-osteoblastic mesenchymal cells to be tested, all of them with the potential to induce bone formation. The initial assays were related to define cell morphology and cell attachment potential to PCL porous surface structure. Confocal images at **Figure 8(a)** and Fig. 10**(a)** indicate cells adhere and spread properly to the material surface, while SEM images at **Figure 8(b)** and **Fig. 10****(b-d)** indicate that all tested mesenchymal cells were able to cover the porous surface forming a cell monolayer on top of it. Then, the inventors tested cell viability on the PCL porous material and data were compared to control standard cell tissue culture plastic (TCP) surface. As it can be observed in figure 9(c) and **Fig. 10****(b-c)** the viability of mesenchymal cells at PCL surface at 1 and 7 days is comparable to the viability at control surface, indicating the mesenchymal cells are able to attach and grow on the fabricated porous PCL surfaces.

Aiming to test any potential effect of porosity on the cell differentiation ability, the inventors induced osteogenic differentiation by adding BMP-2 osteoinductive growth factor to the cell culture media. As ALP is considered an early osteogenic marker induced by the BMP-2 treatment, it was tested at 7 days of cell culture. Data in **Figure 8(d)** indicate mesenchymal cells were able to induce the expression of ALP at similar level when seeded at control surface and at porous PCL surface.

Following the *in vitro* results, the inventors moved to test the materials in an *in vivo* tissue formation context. For this aim, and taking advantage of our previous experience in ectopic bone formation approaches (Passaro D. et al. JoVE (Journal of Visualized Experiments). 2017:e55914; Abarrategi A. et al. The Journal of clinical investigation. 2017;127:543-8; Abarrategi A,. et al. PloS one. 2012;7:e34117; Mian SA et al. Blood cancer discovery. 2021;2:135;] Kurelac I. et al. Journal of clinical medicine. 2019;8:2184), the inventors provided to the porous PCL material the osteoinductive cells and the factors required to induce bone formation after subcutaneous implantation **(****Figure 9(a)**). Basically, the implant composition was similar to the previously shown *in vitro* cell culture study on materials and the osteogenesis induction by BMP-2, but in this case the assay was done *in vivo,* as it is the only way to actually form bone tissue. As it can be observed in computerized tomography images at **Figures 9****(b-c),** 8 weeks after implantation the approach yields the formation of subcutaneous ossicles, observed as bright white structure with the same intensity as the rib bones located below it. Histology study at **Figure 9(d)** showed mature bone formation at the implanted PCL material, as indicated by the bone and bone marrow formation surrounding the material and the formation of a thin layer of bone tissue in close contact to the PCL surface. Interestingly, the thin layer of bone tissue showed circular-shaped invaginations coming into the PCL material, indicating the bone at PCL surface is formed following the surface pore structure and also inside the pores present in the material surface.

During material preparation, it was observed an interconnected structure between SCCO₂ generated internal porosity and the breath figures technique generated surface porosity, but in these *in vivo* implantation approach the inventors were unable to detect tissue formation inside the PCL structure. Most probably, this feature may be related to two phenomena taking place in the tissue formation process: first, the formation of bone tissue in the porous structure of the surface may prevent further tissue formation inner the implanted material. Second, the relatively short implantation period may not be enough to allow PCL biodegradation process, which would eventually expose internal pore structure and facilitate further replacement of the implant area by the newly formed tissue. In any case, these *in vivo* results indicate that these porous PCL materials are implantable and potentially useful for bone tissue formation applications, as they can be used as carrier of osteogenic cells and factors. Moreover, the newly formed tissue follows the surface porous pattern, which improves the integration of the material with the newly formed bone tissue.

## Claims

1. A process to prepare porous 3D polymeric structures comprising the following steps:
a) 3D co-printing of two materials:
• a first material consisting of poly(vinyl alcohol) (PVA) and conforming an external sacrificial mould, wherein said mould comprises at least two holes, and
• a second material:
- consisting of a polymer or of a blend of polymers having a Glass Transition Temperature (Tg) below the Tg of the PVA used as the first material or
- consisting of a blend of a polymer having Tg below the Tg of the PVA used as the first material with polyethylene glycol (PEG) or with an additive selected from a non-water soluble inorganic salt, graphene oxide or a calcium phosphate mineral,
and wherein the second material partially fills the inner cavity of the external sacrificial mould,
b) contacting the mould partially filled with the second material obtained in step a) with supercritical CO₂ (SCCO₂), to induce the direct formation of micropores in the second material,
c) dipping the mould containing the second material obtained in step b) in water to dissolve the mould of PVA, so that the second material structure is released, and
when the second material referred in step a) consists of the polymer or consists of the blend of a polymer with the non-water soluble inorganic salt or graphene oxide, the following step d) is required:
d) creating microporous on the surface structure of the second material by using the Breath Figures approach, thus obtaining the corresponding porous 3D polymeric structure.

2. The process, according to claim 1, wherein the printed second material occupies between 40 and 80 % of the volume inside the mould.

3. The process, according to claim 1 or 2, wherein the PVA is printed a temperature between 190 ºC and 220 ºC, and/or at a speed between 10 and 60mm/s.

4. The process, according to any of the previous claims, wherein the second material is printed a temperature between 130 ºC and 170 ºC and/or at a speed between 10 and 30mm/s.

5. The process, according to any of the previous claims, wherein the external sacrificial mould comprises at least two shells.

6. The process, according to any of the previous claims, wherein the temperature for the SCCO₂ foaming in step b) is between 35 and 135ºC and/or the pressure of the SCCO₂ is between 6 to 45 MPa.

7. The process, according to any of the previous claims, wherein the foaming step b) is carried out during a time between 1 and 5 h.

8. The process, according to any of the previous claims, wherein the SCCO₂ is removed after the foaming step and before step c) by simply depressurization and without the use of organic solvents.

9. The process, according to any of the previous claims, wherein step c) is carried out by dipping the mould containing the second material in water at a temperature above 20 ºC and below 60 ºC for a time between 6 to 48 hours.

10. The process, according to claim 9 wherein step c) is carried out at temperature between 20ºC and 25ºC.

11. The process, according to any of the previous claims, wherein the Breath Figures approach in step d) is carried out by immersing second material structure obtained in step c) in a solvent wherein second material is partially soluble for 1 to 15 s and then drying in moist atmosphere having relative humidity above 70%.

12. The process, according to claim 11, wherein the Breath Figures approach in step d) is carried out at temperature between 20 and 25ºC.

13. The process, according to claim 11 or 12, wherein the solvent wherein the solvent used in step d) is selected from CHCl₃, THF and acetone.

14. The process, according to any of the proceedings claims, wherein the polymers having a Tg below the Tg of PVA is selected from: poly-ε-caprolactone (PCL), poly lactic-co-glycolic acid (PLGA), polyhydroxybutyrate (PHB), polybutylene succinate (PBS) and polydioxanone (PDX).

15. The process, according to any of the proceedings claims, wherein the second material is PCL or a blend of PCL and an additive selected from: NaCl and graphene oxide.
